# EUROPEAN PATENT SPECIFICATION

(11) **EP 1 367 910 B1**
(45) Date of publication and mention of the grant of the patent: **24.01.2007**
(21) Application number: 02704698.6
(22) Date of filing: 04.02.2002
(51) Int. Cl.: A23L 1/24

(54) **IMPROVED PROCESS FOR PRODUCING EMULSIFIED SALAD DRESSINGS**
VERBESSERTES VERFAHREN ZUR HERSTELLUNG EMULGIERTER SALATSAUCEN
PROCEDE AMELIORE D'OBTENTION DE SAUCES A SALADE EMULSIFIEES

(30) Priority: 07.03.2001 US 800547
(43) Date of publication of application: 10.12.2003
(73) Proprietor: UNILEVER N.V., 3013 AL Rotterdam (NL); UNILEVER PLC, London, Greater London EC4P 4BQ (GB)
(72) Inventor: MAZA, Aurelia, Livingston, NJ 07039 (US); ZIEGERT, Thaddeus, Russel, Hackettstown, NJ 07840 (US); BENSEMA, James, Branchburg, NJ 08876 (US); LANGBEIN, Christopher, Somerset, NJ 08873 (US)
(74) Representative: Tjon Tien Ril, Hon Kong Guno
(86) International application number: PCT/EP2002/001349
(87) International publication number: WO 2002/069737

(56) References cited:
- WO-A-01/14049
- US-A- 3 940 115
- US-A- 5 104 670
- US-A- 6 136 366

## Description

### Field of the Invention

The invention pertains to a process for the production of emulsified spoonable and pourable dressings comprising the combination of raw material phases in a pre-mix tank to form a coarse emulsion and then having final emulsification of the ingredients in an in-line mixer/emulsifier. The in-line mixer/emulsifier comprises at least one set of aligned rotor and stator comprising a plurality of teeth having vanes, wells and generally slanted walls with a gap defined by the vanes and wells. The dimensions of the gap are adjustable in particular increments, and the speed of the motor which drives the rotor can be varied while the in-line mixer/emulsifier is processing the ingredients. The process enables final emulsification of the raw material phases with a single pass through the in-line mixer/emulsifier. The process can be used to make a wide variety of emulsified spoonable and pourable dressings, such as mayonnaise, mayonnaise-type dressings and pourable salad dressings.

### The Prior Art

Spoonable and pourable dressings, such as mayonnaise, mayonnaise-type dressings and salad dressings, generally comprise primarily two or more immiscible phases, such as oil and water in the form of an emulsion. Forming an oil-in-water emulsion, for example, requires significant energy transfer to disperse the oil phase in the water phase. The energy deforms and breaks up the oil droplets into progressively smaller droplets to disperse the oil into the water to obtain the emulsion.

U.S. Patent No. 1,949,791 addresses a process for making salad dressing using a mixer and emulsifier and discloses using a homogenizer, viscolizer, colloid mill or similar apparatus as the emulsifier. Examples of typical mills used for making spoonable and pourable dressings are colloid mills such as a Charlotte Colloid Mill from Chemicolloid Laboratories, Inc., Garden City Park, New York, U.S.A. U.S. Patent No. 4,844,620 concerns a process for making a high-internal-phase-ratio emulsion using an in-line mixer/emulsifier wherein product from the in-line mixer/emulsifier recirculates back through the in-line mixer/emulsifier for further processing.

U.S. Patent No. 3,940,115 concerns the use of a stator and rotor type mill for emulsification. U.S. Patent No. 3,940,115 discloses that with conventional stator and rotor type mills attaining the frequency required for forming an emulsion is impossible or, at best, extremely difficult. This problem is said to be overcome in U.S. Patent No. 3,940,115 by a device that permits adjustment of the opening between the rotor and stator.

It was an object of the invention to develop a new process for making spoonable and pourable dressings that has greater flexibility and requires less equipment and capital than commercial processes in the art.

It was a further object of the invention to develop a new process for making spoonable and pourable dressings using an in-line mixer/emulsifier requiring only one pass through the in-line mixer/emulsifier.

It was yet another object of the invention to develop a process to make a wide variety of spoonable and pourable dressings.

These and other objects of the invention are achieved by the process comprising an in-line mixer/emulsifier having at least one set of stator and rotor each comprising mutually engaging teeth wherein the gap opening between the rotor and stator is adjustable within certain increments and the frequency of rotation of the rotor is variable and can be adjusted while the process is operating. The process provides for the manufacture of a wide variety of spoonable dressings, such as mayonnaise, mayonnaise-type dressing and pourable salad dressing, using the same process.

In the present Specification, all parts and percentages are by weight/weight unless otherwise specified.

### SUMMARY OF THE INVENTION

The invention pertains to a process for making high quality stable emulsions for spoonable and pourable dressings. The process comprises the combination of one or more phases of ingredients in a pre-mix tank where preliminary coarse emulsification occurs, and final emulsification takes place in a specially adapted in-line mixer/emulsifier in which the gap opening between a stator and rotor and the rotational and tip speed may be adjusted to obtain acceptable emulsification, particularly oil and water emulsions. The process can be used to make a wide variety of spoonable and pourable dressings.

The in-line mixer/emulsifier comprises at least one set of stator and rotor, preferably one set, having axially engaging teeth, in the form of concentric vanes and wells. The teeth comprise a plurality of concentric vanes and concentric wells with generally slanted walls there between. The rotor and stator are aligned such that the concentric vanes of the stator align with the corresponding concentric wells of the rotor and the concentric wells of the stator engage with the corresponding concentric vanes of the rotor, with the generally slanted walls of the stator aligned with the generally slanted walls of the rotor. A gap is defined by the axial opening between the tip of each concentric vane and the bottom of each concentric well and a slanted opening defined by the opposing generally slanted walls of the teeth of the stator and rotor. In the process of the invention, this gap opening is adjustable in increments of about 0.015 inches in axial opening dimension which allows use of a single in-line mixer/emulsifier for making a wide variety of spoonable and pourable dressings, such as mayonnaise, low fat mayonnaise-type dressings and light mayonnaise-type dressings and full fat and reduced fat salad dressings, and thus provides desired flexibility to the entire process.

The coarse emulsion from the pre-mix tank enters the gap between the stator and rotor at a central supply point at the center of the stator and is propelled concentrically and radially to the edge of the rotor and stator by the centrifugal force caused by the movement of the rotor against the stator and natural flow of the coarse emulsion arising from the pumping of the coarse emulsion into the center of the stator. In certain embodiments of the invention, the teeth of the stator and rotor are configured with radial channels to enhance radial flow. During movement, the liquid particles of the phases are moved through the concentric sets of engaged vanes and wells of the rotor and stator which creates a shear force that provides final emulsification by dispersing the immiscible phases of the ingredients. The rotor operates on a shaft which is driven by a variable speed motor. The process is equipped with a control that allows for variation of the speed of the motor as the process and in-line mixer/emulsifier are operating. This aspect of the process allows for adjustment of the process during operation to provide for better emulsification properties, less product loss and, together with the benefits achieved from the incremental adjustment capability of the gap, a more flexible process for a wide variety of spoonable and pourable dressings in the same production line.

### DESCRIPTION OF THE DRAWINGS

**Fig. 1** is a flow diagram of a typical process of the invention.
**Fig. 2** is cross-sectional diagram of a typical in-line mixer/emulsifier useful for the invention.
**Fig. 3** is an expanded view diagram showing the mutually engaging teeth of a stator and rotor.
**Fig. 4** is a front view of a stator used for the invention.
**Fig. 5** is a cross-section of the stator shown in **Fig. 4.**
**Fig. 6** is a front view of a rotor used for the invention.
**Fig. 7** is a cross-section of the rotor shown in **Fig. 6.**
**Fig. 8** is a cross-section of the stator shown in **Fig. 5** and rotor shown in **Fig. 6** mutually engaged.

### DETAILED DESCRIPTION OF THE INVENTION

Raw ingredients are combined in the process to make products comprising an emulsion. In the preferred embodiment, spoonable and pourable dressings are made by the process through the combination of one or more separate phases comprising raw ingredients. For example, for mayonnaise products these phases may include an oil phase, an egg phase and an aqueous phase; for starch-based spoonable dressings, these phases may include an oil phase, an egg phase and a starch paste phase; for low fat mayonnaise these phases may include an oil phase, an egg phase, a starch paste phase, a sweetener phase and an aqueous phase, and for pourable dressings these phases may include an aqueous phase, an oil phase, an acidulent phase and, optionally, a solids phase.

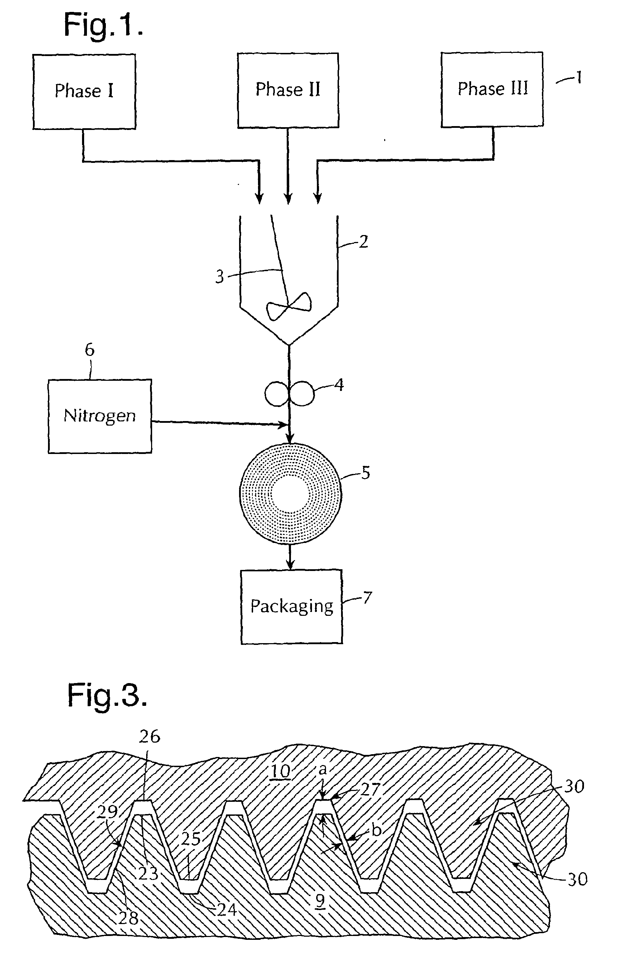

Now referring to **Fig. 1** which is flow a diagram of typical process of the invention involving the manufacture of mayonnaise and mayonnaise-type products involving the combination of three raw material phases (Phase I-Phase III), it being understood that these figures are merely illustrative as the process may comprise the combination of one or more phases in a pre-mix tank for coarse emulsification (pre-emulsification) with the final emulsification occurring in an in-line mixer/emulsifier, the separate phases are stored in means for raw material storage **1** such as storage tanks, vessels, containers or product packaging. In certain embodiments of the invention, particularly when spoonable dressings are made, the phases are then circulated separately on a continuous basis through piping and may be circulated by circulation means (not shown) such as a pump to a pre-mix tank **2** where coarse emulsification occurs. In embodiments of the invention involving pourable dressings, the raw material phases may be combined on a batch basis in the pre-mix tank where coarse emulsification occurs and then each batch of coarse emulsion is continuously fed through the remainder of the process. The pre-mix tank comprises a means for mixing **3,** such as a stirrer, impeller, shaker and the like, which mixes the raw ingredients to form a coarse emulsion. The coarse emulsion is circulated by piping to circulation means **4,** such as a pump, to an in-line mixer/emulsifier **5.** Examples of in-line mixer/emulsifiers useful for the invention are those available from Charles Ross & Son Co., Happauge, New York, USA particularly model ME-4125XS-15 equipped with means to vary the gap opening between the stator and rotor and a variable speed motor. Examples of rotors and stators useful for the in-line mixer/emulsifier of the invention are described in U.S. Patent No. 5,632,596 which is incorporated herein by reference. The process operates on a continuous basis and emulsified product leaving the in-line mixer/emulsifier is generally sent to packaging or for further processing.

The process may also comprise optional means for injecting gas **6** into the emulsion while the coarse emulsion is being processed by the in-line mixer/emulsifier. Such means may be a pressure vessel, such as a gas tank, with a regulated valve and piping from the valve to the in-line mixer/emulsifier. The gas is injected into the coarse emulsion at some point between the location where the coarse emulsion exits the pre-mix tank **2** to the location where the coarse emulsion enters the gap of stator and rotor. Examples of gasses which may be injected into the coarse emulsion are nitrogen, carbon dioxide, or combinations thereof.

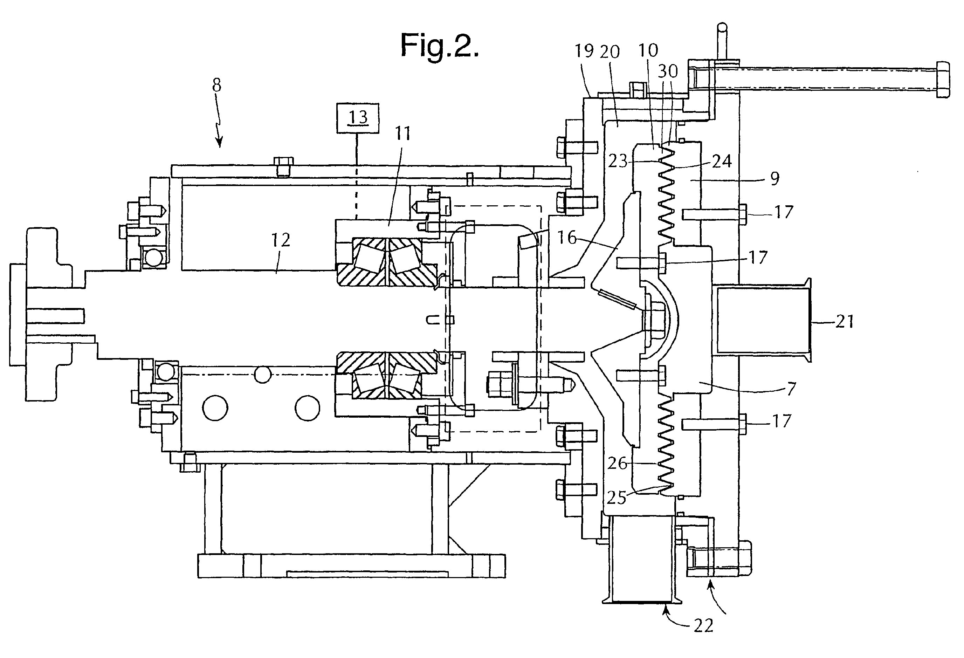

Now referring to **Fig. 2** which is a cross-section of an in-line mixer/emulsifier apparatus shown generally as **8** useful for the process, the in-line mixer/emulsifier comprises a stator **9** and a rotor **10.** The in-line mixer/emulsifier further comprises a shaft **12** which is attached on one end to a rotor flange **16** and on a second end to the variable speed motor **11.** The rotor **10** is attached to the rotor flange **16** by securing means **17,** which as shown in **Fig. 2** may be bolts or machine screws. The in-line mixer/emulsifier further comprises a stator flange **18** and the stator **9** is secured to the stator flange **18** by securing means **17,** which as shown in Fig. **2** may be bolts or machine screws. The in-line mixer/emulsifier further comprises a casing **19** which interacts with the rotor flange **16,** rotor **10,** stator flange **18** and stator **9.** The stator flange **18** with attached stator **9** is generally secured to the casing **19** in a manner that creates an annular space **20** defined by the casing **19,** rotor flange **16,** rotor **10,** stator flange **18** and stator **9,** and the attachment is also made so that the elements, particularly the teeth **30,** of the stator **9** and rotor **10** interact with one another. The casing **19** and/or stator flange **18** may comprise a cooling jacket **22.**

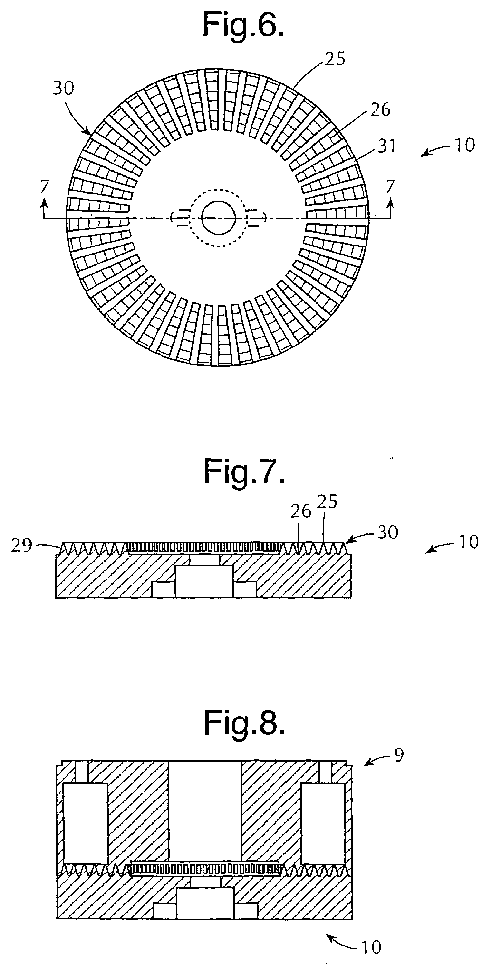

The teeth **30** of the stator **9** and rotor **10** are engaged. For example, the stator **9** and rotor **10** may be equipped with mutually, co-axially engaging rings of teeth. Embodiments of the invention shown in **Figs. 2**-**8** illustrate the teeth **30** of the stator **9** having a plurality of concentric vanes **23** and concentric wells **24.** The teeth **30** of the stator **9** have generally slanted side walls **28** which are from each vane **23** to each well **24.** The rotor **10** also has teeth **30** having a plurality of concentric vanes **25** and concentric wells **26.** The teeth **30** of the rotor **10** have generally slanted side walls **29** which are from each vane **25** to each well **26.** When engaged, the stator **9** and rotor **10** are aligned such that the concentric vanes **23** of the stator **9** align within the corresponding concentric wells **26** of the rotor **10** and the concentric vanes **25** of the rotor **10** align with the concentric wells **24** of the stator **9** and corresponding generally slanted walls **28** and **29** of the stator **9** and rotor **10** align. An opening, a gap **27,** is defined by the tip of each concentric vane and the bottom of each concentric well and the aligned slanted walls.

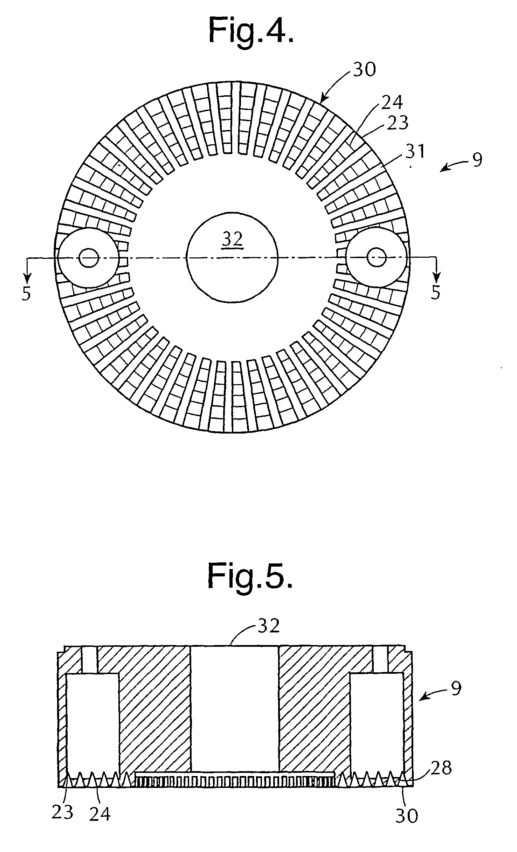

In the embodiment depicted in **Figs. 4-8,** the concentric teeth **30** of the stator **9** and rotor **10** are separated with the space between each set of concentric teeth defining a radial channel **31,** and the stator **9** and rotor **10** will comprise a plurality of such radial channels **31.** In these embodiments, the aligned stator and rotor form both radial and concentric channels for fluid flow.

**Fig. 2** shows an in-line mixer/emulsifier that can typically be used for the process and the typical elements of the stator and rotor. **Figs. 4-8** show an embodiment of a stator and rotor that can be used in the in-line mixer/emulsifier for the process, such stator and rotor being generally available from Charles Ross & Son Co. and are described in U.S. Patent No. 5,632,596. It being understood, however, that any type of in-line mixer/emulsifier comprising a stator and rotor having the dimensions, specifications and characteristics discussed herein can be used in the process.

As shown in **Fig. 3** the gap will have an axial opening dimension (a) and a slanted opening dimension (b) and the in-line mixer/emulsifiers used for the process have a means for adjusting the axial opening dimension (a) and slanted opening dimension (b). The gap opening may be adjusted in set increments by adding or removing shims generally located between the rotor and rotor flange. The axial opening dimension of the gap may be adjusted in increments of about 0.015 inches and the ability to adjust the gap in such small increments, together with the ability to alter the speed of the motor, allows the process to be used to make a wide variety of high quality spoonable and pourable dressings, for example, the spectrum of from mayonnaise to creamy salad dressings. The slanted opening dimension will be a function of the design of the teeth, however, in preferred embodiments the slanted opening dimension will be about ⅓ the incremental change of the axial opening dimension. The gap is adjustable at about 0.015 inch increments in axial opening dimension to an axial opening dimension (a) of between about 0.010 inches to about 0.500 inches, preferably about 0.030 inches to about 0.180 inches, with the corresponding slanted opening dimension (b) being about 0.003 inches to about 0.167 inches, preferably between about 0.010 inches and 0.060 inches. The opening of the gap is adjusted when the rotor is stationary.

The stator can be of any dimension, but preferably has a diameter of about 6 inches or more, preferably about 9 inches or more, such as about 12 inches to about 18 inches, most preferably about 15 inches. The stator and rotor may be made from any material acceptable for food processing, preferably stainless steel, including 316, 316L, AL6XN or SMO654 stainless steel. The diameter of the rotor and stator and gap opening dimension, in addition to variation in motor speed, will affect emulsification of the raw ingredient phases and, in part, allows use of the in-line mixer/emulsifier to make a final emulsion on a continuous basis with one pass through the in-line mixer/emulsifier. Also, these process parameters provide flexibility to the process for making a wide variety of spoonable and pourable dressings.

Referring now to **Figs. 2** and **4-5,** the coarse emulsion will enter the in-line mixer/emulsifier through the inlet tube **21** from which it is released to the gap of the rotor and stator though a central inlet point (shown by way of example in **Figs. 4-5** as **32)** in the stator. The molecules of the coarse emulsion move through the concentric sets of engaged vanes and wells of the rotor and stator, by centrifugal force and also by the pumping of the coarse emulsion into the central inlet point. The movement of the vanes and wells of the rotor against those of the stator creates a shear force that transfers energy to the particles moving through the rotor and stator which further disperses the immiscible phases of the coarse emulsion and creates the final emulsion of the spoonable or pourable dressing. In embodiments of the invention where the stator and rotor comprise radial channels **31,** the radial channels enhance radial movement as the coarse emulsion moves through the gap opening. The emulsified spoonable or pourable dressing is ejected from the rotor and stator and is collected in the annular space **20** to an outlet tube **22.** After leaving the outlet tube **22,** the emulsified dressing can be further processed, if necessary, or packaged.

The operating speed of the rotor is a function of the size of the rotor, the gap (i.e. axial opening dimension and slanted opening dimension) and the ingredients that are being emulsified. The in-line mixer/emulsifier is equipped with variable speed motor that allows changes in rotational speed while the in-line mixer/emulsifier is operating. The motor can generally operate at up to about 3,600 revolutions per minute ("rpm"), preferably between about 300 rpm and about 3,600 rpm. The rotor operates at rotational speeds of about 1,500 rpm to about 8,000 rpm, preferably about 1,900 rpm to about 5,000 rpm, and a tip speed of about 6,500 ft/min to about 15,000 ft/min, preferably about 7,125 ft/min to about 14,125 ft/min.

The in-line mixer/emulsifier equipped with a stator and rotor can make high quality emulsified spoonable and pourable dressings with the process operating at throughput rates of between about 100 pounds per minute to about 1,000 pounds per minute, preferably about 250 pounds per minute to about 900 pounds per minute, with the in-line mixer/emulsifier operating with a current frequency of between about 10 Hz and about 75 Hz with the gap adjustable in increments of about 0.015 inches in axial opening dimension, having the axial opening dimension between about 0.010 inches and about 0.500 inches with corresponding slanted opening dimension about 0.003 inches to about 0.167 inches. For example, high quality mayonnaise products can be made with the process having throughput rates of about 145 pounds per minute to about 1,000 pounds per minute, preferably between about 250 pounds per minute to about 900 pounds per minute, with the in-line mixer/emulsifier operating with a current frequency of between about 20 Hz and about 60 Hz with the gap having an axial opening dimension at between about 0.060 inches and about 0.120 inches and corresponding slanted opening dimension of between about 0.020 inches and about 0.040 inches and starch-based light mayonnaise products can be made with the process having throughput rates of about 145 pounds per minute to about 1,000 pounds per minute, preferably about 500 pounds per minute to about 750 pounds per minute with the in-line mixer/emulsifier operating with a current frequency of between about 10 Hz and about 36 Hz with the gap having an axial opening dimension at between about 0.090 inches and about 0.120 inches, and corresponding slanted opening dimension of between about 0.030 inches and about 0.040 inches. By way of comparison, conventional processes for making mayonnaise using mills cannot operate at such throughput rates, for example most Chemicolloid mills, can operate at about 4 pounds per minute, about 130 pounds per minute or about 250 pounds per minute.

The in-line mixer/emulsifier is equipped with a variable speed motor which has a infinitely adjustable current frequency, preferably, however, the in-line mixer/emulsifier motor can have current frequency adjusted in increments of about 0.050 Hz. The current frequency can be adjusted to affect the emulsification properties while the process is operating. For example, the process does not need to be stopped to adjust the current frequency to change product characteristics.

The process can be used to make a wide variety of spoonable and pourable dressings. The process can be used to make a mayonnaise product comprising the combination of up to three or more raw material phases; an oil phase comprising oil or oil blend, an egg phase comprising egg, salt, sweetener, such as sugar, and water and an aqueous phase comprising water and acidulent, such as vinegar. The process can also be used to make starch-based light mayonnaise-type dressing comprising the combination of up to three or more raw material phases; an oil phase comprising oil or oil blend, an egg phase comprising egg, salt, sweetener such as sugar and water and a starch paste phase comprising starch, water and acidulent, such as vinegar. The process can be used to make a low fat mayonnaise comprising the combination of up to five or more phases including an oil phase comprising oil, an egg phase comprising egg, salt and water, a starch paste phase comprising starch, water, vinegar and texturizing agents, a sweetener phase comprising water and sweetener such as sugar and a aqueous phase comprising water. The process may also be used to make a pourable dressing, such as creamy salad dressing, comprising the combination of up to four or more raw material phases, such as an aqueous phase comprising water, preservatives, texturizers, and sweeteners, an oil phase comprising salad oil, emulsifiers, flavorings and colorings, an acidulent phase comprising acidulent, such as vinegar, salt and, optionally, a solids phase comprising particulates.

The combination of ability to alter dimension of the gap opening in increments of about 0.015 inches in axial opening dimension and the capability to adjust the in-line mixer/emulsifier motor speed (i.e. the current frequency) provides for a flexible process for the manufacture spoonable and pourable dressings with improved quality and uniformity in a single manufacturing process thereby reducing capital and operating costs. This combination provides for greater flexibility to produce a variety of edible emulsions from spoonable to pourable dressings having a wide texture range from creamy to firm. Emulsification conducted with this process can produce products with reduced oil content and reduced level of emulsifying components compared to conventional processes.

Altering the gap opening combined with the capability to adjust the motor speed allows the operator to control the disperse phase particle size and particle size distribution resulting in improved emulsion texture and stability. With starch based dressings, the process provides for increased ability to control the integrity of the starch granules and thereby improve the appearance, texture, mouthfeel and flavor release of starch-based dressing. The process also allows for production of pourable salad dressings having included particulates without unnecessary fragmentation of the particulates.

The specially adapted in-line mixer/emulsifier having the adjustable gap and in-process motor speed adjustment capability has the ability to generate substantial shear without causing cavitation leading to reduction of industrial noise and avoidance of erosion. The overall process results in substantial cost savings in capital expenditure, operating costs and cost of raw material. For example, the process comprising one in-line mixer/emulsifier equipped with one set of 15 inch rotor and stator having adjustable gap and variable speed motor can replace four or more of the largest colloid mills and produce the same throughput while expending only about 78% of combined power of four mills and from about 66% to about 76% of the capital costs of four mills.

### EXAMPLES

### EXAMPLE 1

Real mayonnaise comprising about 4% to about 8% egg, about 1 % to about 2% salt, about 1 % to about 3% sugar, about 2% to about 4% vinegar, about 2% to about 27% water and about 65% to about 81 % salad oil was prepared using a model ME-4125XS-15 in-line mixer/emulsifier from Charles Ross & Son Co. equipped with means to vary the gap opening between the stator and rotor in increments of axial opening dimension of about 0.015 inches and a variable speed motor. The in-line mixer/emulsifier was equipped with one set of 15 inch stator and rotor having teeth design similar to that described in **Figs. 4-8.**

The ingredients were combined by first creating, in separate vessels, an oil phase comprising the oil or oil blend, an egg phase comprising egg, salt, sugar and water and an aqueous phase comprising water and vinegar. The separate ingredient phases were combined on a continuous flow basis in a conventional tank of appropriate capacity equipped with a marine propeller for mixing and mixed to obtain a coarse emulsion. The coarse emulsion was then fed on a continuous basis to the in-line mixer/emulsifier having an axial opening dimension set at about 0.075 inches. The in-line mixer/emulsifier was operated at a frequency of between about 35 Hz and about 55 Hz and at average throughput rate of about 500 pounds per minute.

Nine quarts of product prepared in accordance with this procedure were randomly selected and subjected to a taste challenge against mayonnaise produced by conventional processes using a Chemicolloid mill. Eighty-six panelists sampled both mayonnaise made by the process of the invention and conventionally made mayonnaise for overall flavor and spreadability/appearance. No statistically significant differences were seen for overall flavor or spreadability/appearance between the samples made in accordance with the invention and those made by conventional methods.

### EXAMPLE 2

Starch-based light mayonnaise-type product comprising about 6% to about 7% egg, about 2% to about 3% salt, about 2% to about 3% sugar, about 0.05 % to about 0.1 % thickeners, about 4% to about 6% starch, about 3% to about 4% vinegar, about 19% to about 35% salad oil and about 48% to about 58% water was prepared using a model ME-4125XS-15 in-line mixer/emulsifier from Charles Ross & Son Co. equipped with means to vary the gap opening between the stator and rotor at increments in axial opening dimension of about 0.015 inches and a variable speed motor. The in-line mixer/emulsifier was equipped with one set of 15 inch rotor and stator having teeth design similar to that described in **Figs. 4-8.**

The ingredients were combined by first creating, in separate vessels, an oil phase comprising the salad oil, an egg phase comprising egg, salt, sugar and water and a starch paste phase comprising starch which may be fully or partially cooked, water, vinegar and thickener. The separate ingredient phases were combined on a continuous flow basis in a conventional tank of appropriate capacity equipped with a turbine impeller for mixing and mixed to obtain a coarse emulsion. The coarse emulsion was then fed on a continuous basis for a total time of about 24 hours to the in-line mixer/emulsifier having an axial opening dimension set at about 0.075 inches for about the first 7.5 hours of the run, an axial opening dimension set at about 0.105 inches for about the next 3.5 hours of the run and an axial opening dimension set at about 0.120 inches for about the last 13 hours of the run. The in-line mixer/emulsifier was operated at a frequency of between about 10 Hz and about 36 Hz and at an average throughput rate of about 500 pounds per minute. High quality starch-based light mayonnaise products were made through the process.

### EXAMPLE 3

Low-fat mayonnaise comprising about 2% to about 4% egg, about 2% to about 3% salt, about 6% to about 8% sugar, about 2% to about 4% vinegar, about 5% to about 6% oil, about 6% to about 8% starch, about 0.5% to about 0.7% texturizing agents and about 75% to about 85% water was prepared using a model ME-4125XS-15 in-line mixer/emulsifier from Charles Ross & Son Co. equipped with means to vary the gap opening between the stator and rotor at increments in axial opening dimension of about 0.015 inches and a variable speed motor. The in-line mixer/emulsifier was equipped with one set of 15 inch stator and rotor having teeth design similar to that described in **Figs. 4-8.**

The ingredients were combined by first creating, in separate vessels, an oil phase comprising the oil, an egg phase comprising egg, salt and water, a starch paste phase comprising starch which may be fully or partially cooked, water, vinegar and texturizing agents, a sweetener phase comprising water and sugar and an aqueous phase comprising water. The separate ingredient phases were combined on a continuous flow basis in a conventional tank of appropriate capacity equipped with a turbine impeller for mixing and mixed to obtain a coarse emulsion. The coarse emulsion was then fed on a continuous basis to the in-line mixer/emulsifier having an axial opening dimension set at about 0.120 inches. The in-line mixer/emulsifier was operated at a frequency of between about 10 Hz and about 30 Hz and at average throughput rate of about 500 pounds per minute. High quality low fat mayonnaise products were made through the process.

### EXAMPLE 4

A creamy salad dressing comprising about 1% to about 3% texturizers, about 0.1 % to about 4% sweeteners, about 0.01 % to about 0.2% preservatives, about 0.1 % to about 0.3% emulsifiers, about 1% to about 2.5% flavorings and colorings, about 2% to about 8% acidulent, about 1% to about 3% salt, about 0.1 % to about 6% particulates, about 45% to about 55% salad oil and about 27% to about 31 % water was prepared using a model ME-706XS-30 in-line mixer/emulsifier from Charles Ross & Son Co. equipped with means to vary the gap opening between the stator and rotor and a variable speed motor. The in-line mixer/emulsifier was equipped with one set of 6 inch stator and rotor having teeth design similar to that described in **Figs. 4-8.**

The ingredients were combined by first creating, in separate vessels, an oil phase comprising the oil, emulsifier and flavorings and colorings, an acidulent phase comprising acidulents and salt, an aqueous phase comprising water, texturizers, sweeteners and preservatives and a solids phase comprising particulates. A batch of coarse emulsion was prepared by combining the aqueous phase, oil phase and acidulent phase in a conventional tank of appropriate size equipped with a marine propeller and mixing to obtain a coarse emulsion. After the coarse emulsion was established, the particulate phase was added to the mixer and mixing continued to disperse the particulates within the coarse emulsion. The batch of coarse emulsion with particulates was then fed on a continuous basis to the in-line mixer/emulsifier having an axial opening dimension set at about 0.050 inches. The in-line mixer/emulsifier was operated at a frequency of between about 20 Hz and about 70 Hz and at average throughput rate of about 100 pounds per minute to about 120 pounds per minute. High quality creamy salad dressing products without unnecessary fragmentation of the particulate were made through the process.

## Claims

1. A process for making spoonable and pourable dressings comprising
a) combining raw ingredients in a pre-mix tank comprising a means for mixing to form a coarse emulsion, and
b) processing the coarse emulsion in one pass through an in-line mixer/emulsifier comprising at least one set of stator and rotor, and a variable speed motor to drive the rotor, wherein the stator and rotor comprise co-axially engageable rings of teeth having a plurality of concentric vanes and concentric wells with generally slanted side walls from each vane to each well and the rotor and stator when engaged are such that the concentric vanes of the stator align with the corresponding concentric wells of the rotor and the concentric vanes of the rotor align with the corresponding concentric wells of the stator with the corresponding generally slanted walls of the stator and rotor aligned and when engaged a gap having an axial opening dimension and a slanted opening dimension is defined by each concentric vane and each concentric well and the aligned slanted walls and the gap is adjustable in increments of about 0.038 centimeters in axial opening dimension; wherein the co-axially engageable rings of teeth of the stator and rotor are separated to define radial channels

2. The process according to Claim 1 wherein the axial opening dimension is from about 0.025 centimeters to about 1.27 centimeters.

3. The process according to claim 1 or 2 wherein the diameter of the stator and rotor is about 22 centimeters or more.

4. The process according to anyone of the preceding claims wherein the adjustable motor operates at up to about 3,600 rpm.

5. The process according to anyone of the preceding claims wherein the rotor has a tip speed of about 1,981 m/min to about 4,572 m/min.

6. The process according to anyone of the preceding claims having a throughput rate of about 45 kilograms per minute to about 454 kilograms per minute.

7. The process of Claim 1 wherein the stator and rotor comprise a plurality of radial channels.

8. The process of Claim 1 or 7 wherein the raw ingredients are comprised of an oil phase, an egg phase and an aqueous phase.

9. The process of Claim 1 or 7 wherein the raw ingredients are comprised of an oil phase, an egg phase and a starch paste phase.

10. The process of Claim 1 or 7 wherein the raw ingredients are comprised of an oil phase, an egg phase, a starch phase, a sweetener phase and an aqueous phase.

11. The process of Claim 1 or 7 wherein the raw ingredients are comprised of an aqueous phase, an oil phase, an acidulent phase and, optionally, a solids phase.

12. The process of Claim 1 or 7 wherein the raw ingredients are combined to form an emulsion containing product.

13. The process of Claim 1 or 7 wherein the stator and rotor comprise co-axially engageable rings of teeth having a plurality of concentric vanes and concentric wells with generally slanted side walls from each vane to each well.

## Patentansprüche

1. Verfahren zur Herstellung löffelbarer und gießbarer Saucen, umfassend
a) das Vereinigen roher Ingredienzien in einem Vormischbehälter mit einer Mischeinrichtung zur Bildung einer groben Emulsion, und
b) das Verarbeiten der groben Emulsion in einem Durchgang durch eine In-line-Mischer-/Emulgier-Vorrichtung mit mindestens einem Satz aus Stator und Rotor und einem Motor mit variabler Geschwindigkeit zum Antreiben des Rotors, wobei der Stator und der Rotor koaxial miteinander in Eingriff bringbare Zahnringe mit einer Mehrzahl konzentrischer Rippen und konzentrischer Vertiefungen mit im Allgemeinen geneigten Seitenwänden von jeder Rippe zu jeder Vertiefung aufweisen und der Rotor und Stator, wenn sie sich in Eingriff miteinander befinden, so beschaffen sind, dass die konzentrischen Rippen des Stators mit den entsprechenden konzentrischen Vertiefungen des Rotors fluchten und die konzentrischen Rippen des Rotors mit den entsprechenden konzentrischen Vertiefungen des Stators fluchten, wobei die entsprechenden, im Allgemeinen geneigten Wände von Stator und Rotor fluchten und, bei bestehendem Eingriff, ein Spalt mit einer axialen Öffnungsgröße und einer geneigten Öffnungsgröße durch jede konzentrische Rippe und jede konzentrische Vertiefung und die fluchtenden, geneigten Wände festgelegt ist, und der Spalt in Schritten von etwa 0,038 cm in der axialen Öffnungsgröße einstellbar ist; wobei die koaxial miteinander in Eingriff bringbaren Zahnringe von Stator und Rotor getrennt werden, um radiale Kanäle zu definieren.

2. Verfahren nach Anspruch 1, wobei die axiale Öffnungsgröße von etwa 0,025 cm bis etwa 1,27 cm beträgt.

3. Verfahren nach Anspruch 1 oder 2, wobei der Durchmesser des Stators und Rotors etwa 22 cm oder mehr beträgt.

4. Verfahren nach einem der vorhergehenden Ansprüche, wobei der verstellbare Motor mit bis zu 3.600 U/min arbeitet.

5. Verfahren nach einem der vorhergehenden Ansprüche, wobei der Rotor eine Spitzen-Geschwindigkeit von etwa 1.981 m/min bis etwa 4.572 m/min aufweist.

6. Verfahren nach einem der vorhergehenden Ansprüche, mit einer Durchsatzrate von etwa 45 kg/min bis etwa 454 kg/min.

7. Verfahren nach Anspruch 1, wobei der Stator und der Rotor eine Mehrzahl von radialen Kanälen aufweisen.

8. Verfahren nach Anspruch 1 oder 7, wobei die rohen Ingredienzien aus einer Öl-Phase, einer Ei-Phase und einer wässrigen Phase bestehen.

9. Verfahren nach Anspruch 1 oder 7, wobei die rohen Ingredienzien aus einer Öl-Phase, einer Ei-Phase und einer Stärkepasten-Phase bestehen.

10. Verfahren nach Anspruch 1 oder 7, wobei die rohen Ingredienzien aus einer Öl-Phase, einer Ei-Phase, einer Stärkepasten-Phase einer Süßstoff-Phase und einer wässrigen Phase bestehen.

11. Verfahren nach Anspruch 1 oder 7, wobei die rohen Ingredienzien aus einer wässrigen Phase, einer Öl-Phase, einer Säuerungs-Phase und gegebenenfalls einer Feststoff-Phase bestehen.

12. Verfahren nach Anspruch 1 oder 7, wobei die rohen Ingredienzien vereinigt werden, um ein eine Emulsion enthaltendes Produkt zu bilden.

13. Verfahren nach Anspruch 1 oder 7, wobei der Stator und der Rotor koaxial miteinander in Eingriff bringbare Zahnringe mit einer Mehrzahl konzentrischer Rippen und konzentrischer Vertiefungen mit im Allgemeinen geneigten Seitenwänden von jeder Rippe zu jeder Vertiefung aufweisen.

## Revendications

1. Procédé de fabrication de sauces pouvant être prélevées à la cuiller et pouvant être versées, comprenant les étapes consistant à :
a) combiner les matières premières dans une cuve de pré-mélange munie de moyens mélangeurs afin de former une émulsion grossière ; et
b) traiter l'émulsion en la faisant passer une fois dans un mélangeur/émulsionneur en ligne, comprenant au moins un jeu de stator et de rotor et un moteur à vitesse variable pour entraîner le rotor, dans lequel le stator et le rotor comprennent des anneaux dentés pouvant s'engager de manière coaxiale et munis d'une pluralité de nervures concentriques et de rainures concentriques, avec en général des parois latérales biseautées qui partent de chaque nervure vers chaque rainure, et le rotor et le stator, lorsqu'ils sont engagés, sont positionnés de telle sorte que les nervures concentriques du stator sont dans l'alignement des rainures concentriques correspondantes du stator, les parois généralement biseautées du stator et du rotor étant alignées, et lorsqu'elles sont engagées, un écart ayant une dimension d'ouverture axiale et une dimension d'ouverture biseautée est défini par chaque nervure concentrique et chaque rainure concentrique, et les parois biseautées alignées et l'écart peut être réglé par paliers d'environ 0,038 centimètres au niveau de la dimension d'ouverture axiale ; dans lequel les anneaux dentés pouvant s'engager de manière coaxiale du rotor et du stator sont séparés pour définir des canaux radiaux.

2. Procédé selon la Revendication 1, dans lequel la dimension d'ouverture radiale va d'environ 0,025 centimètres à environ 1,27 centimètres.

3. Procédé selon la Revendication 1 ou 2, dans lequel le diamètre du stator et du rotor est d'environ 22 centimètres ou plus.

4. Procédé selon l'une quelconque des revendications précédentes, dans lequel le moteur réglable fonctionne jusqu'à environ 3.600 tours/minute.

5. procédé selon l'une quelconque des revendications précédentes, dans lequel le rotor a une vitesse périphérique d'environ 1.981 m/minute à environ 4.572 m/minute.

6. Procédé selon l'une quelconque des revendications précédentes, ayant un débit d'environ 45 kg/minute à environ 454 kg/minute.

7. Procédé selon la Revendication 1, dans lequel le stator et le rotor comprennent une pluralité de canaux radiaux.

8. Procédé selon la Revendication 1 ou 7, dans lequel les matières premières sont composées d'une phase d'huile, d'une phase d'oeufs et d'une phase aqueuse.

9. Procédé selon la Revendication 1 ou 7, dans lequel les matières premières sont composées d'une phase d'huile, d'une phase d'oeufs et d'une phase de pâte.

10. Procédé selon la Revendication 1 ou 7, dans lequel les matières premières sont composées d'une phase d'huile, d'une phase d'oeufs, d'une phase d'amidon, d'une phase édulcorante et d'une phase aqueuse.

11. Procédé selon la Revendication 1 ou 7, dans laquelle les matières premières sont composées d'une phase aqueuse, d'une phase d'huile, d'une phase d'acidulant et facultativement d'une phase de solides.

12. Procédé selon la Revendication 1 ou 7, dans lequel les matières premières sont combinées pour former un produit contenant une émulsion.

13. Procédé selon la Revendication 1 ou 7, dans lequel le stator et le rotor comprennent des anneaux dentés pouvant s'engager de manière coaxiale et munis d'une pluralité de nervures concentriques et de rainures concentriques, avec des parois généralement biseautées entre chaque nervure et chaque rainure.
